# EUROPEAN PATENT SPECIFICATION

(11) **EP 3 096 962 B1**
(45) Date of publication and mention of the grant of the patent: **26.09.2018**
(21) Application number: 15701410.1
(22) Date of filing: 23.01.2015
(51) Int. Cl.: B60B 3/04, B60B 3/16, B21D 53/30, B60B 25/00, B21D 53/26

(54) **SINGLE PIECE WHEEL RIM**
EINTEILIGE RADFELGE
JANTE DE ROUE D'UN SEUL TENANT

(30) Priority: 23.01.2014 GB 201401094
(43) Date of publication of application: 30.11.2016
(73) Proprietor: Titan Steel Wheels Limited, Kidderminster, Worcestershire DY10 3SD (GB)
(72) Inventor: ARNOLD, Stephen John, Kidderminster, Worcestershire DY10 3SD (GB); LEWIS, Stephen James, Kidderminster, Worcestershire DY10 3SD (GB)
(74) Representative: Range, Christopher William
(86) International application number: PCT/GB2015/050154
(87) International publication number: WO 2015/110825

(56) References cited:
- DE-A1- 1 480 759
- DE-A1- 2 843 728
- DE-A1- 3 734 740
- DE-A1- 10 058 808

## Description

The present invention relates to a method of manufacturing a wheel sub-assembly for a vehicle. More specifically the present invention relates to a method of manufacturing a wheel sub-assembly for a very large vehicle.

See for instance DE-A-10058808.

Very large vehicles, such as those used for mobile cranes, quarry excavation or transport of mined material have large diameter wheels. These are bigger than the wheel's of road going heavy goods vehicles (HGVs). Commonly, given their working environment, these types of vehicles are required to operate on unpaved routes, often termed "off-road". Such vehicles require therefore a robust wheel rim and tyre combination.

Known methods for manufacturing wheel rims include single piece wheel rims manufactured using circular rolling techniques for use on commercial vehicles, agricultural vehicles and light construction vehicles. These types of vehicles, however, have relatively small diameter wheel rims, such that relatively thin material may be used in the circular rolling technique.

The wheel rim diameters required for the very large vehicles mentioned above are not produced by these known methods.

A known method for producing wheel sub-assemblies with rims of the diameter required for very large vehicles is through the use of multi-piece rims. Each circular wheel rim is made from three equal segments, approximating 120° each and joined radially by bolting.

A disadvantage of multi-piece rims is that they require loose parts to be in contact with the pneumatic tyre.

The present invention aims to address one or more of the above problems.

According to a first aspect of the present invention there is provided a method of manufacturing a wheel sub-assembly for a wheel of a very large vehicle, the wheel having an axis of rotation, the method comprising the steps of:
providing a first cylindrical blank component, a second cylindrical blank component and an annular disc blank;
press forming the first blank component to form a one piece, axially outer rim portion;
press forming the second blank component to form a one piece, axially inner rim portion;
jointing the outer and inner rim portions to form an annular wheel rim having a base;
machining the inside diameter of the wheel rim base;
press forming the disc blank to form a press-formed disc;
machining the outside edge of the press-formed disc;
press fitting the press-formed disc to the rim base at the machined inside diameter;
welding the press-formed disc to the rim base at the machined inside diameter.

By using a multi-step press forming method, thicker material can be used for the rim compared with conventional rim rolling methods, allowing wheel rims for very large vehicles to be produced. A single piece rim portion, i.e. defining a full circumference, does not have any loose parts in contact with the pneumatic tyre. Furthermore, by press-forming the rim as two separate portions (an inner rim portion and an outer rim portion) a rim asymmetry can more easily be catered for in production. A greater depth of rim well is also achieved, which supports the use of large pneumatic tyres. By press forming the disc separately and subsequently joining to the wheel rim, manufacturing operations on the inner rim portion, outer rim portion and disc may be performed in parallel, improving the efficiency of the manufacturing operation.

The step of press forming the first blank component to form an outer rim portion may comprise multiple press forming operations.

The step of press forming the second blank component to form an inner rim portion may comprise multiple press forming operations.

The method of manufacturing a wheel sub-assembly for a wheel of a very large vehicle may further include the step of machining a valve hole into the outer rim portion.

The method of manufacturing a wheel sub-assembly for a wheel of a very large vehicle may further include the step of machining a valve hole into the inner rim portion.

The method of manufacturing a wheel sub-assembly for a wheel of a very large vehicle may further include the step of machining a detail on the outer rim portion and machining a corresponding detail on the inner rim portion so that when the outer and inner rim portions are joined those details substantially interlock.

According to a second aspect of the present invention there is provided a method of manufacturing a wheel for a very large vehicle, comprising the steps of manufacturing a wheel sub-assembly as hereinbefore described, and comprising the further step of arranging a pneumatic tyre to surround and seat in the outer and inner rim portions of the wheel sub-assembly.

According to a third aspect of the present invention there is provided a wheel sub-assembly having an axis of rotation for a very large vehicle comprising:
a wheel rim; and
a disc;
said wheel rim comprising an axially outer and an axially inner rim portion press formed from first and second blank components respectively and circumferentially joined together to form an annular wheel rim having a wheel rim base, said disc comprising a press formed disc blank having a machined outer edge, press fitted and welded to a machined inside diameter of the wheel rim base.

A single piece rim does not have any loose parts in contact with the pneumatic tyre. Furthermore, rounder and more accurate wheel assemblies can be manufactured more easily and are particularly suitable for highway use, allowing very large vehicles to transit between work sites.

Additional profile changes may easily be accommodated by press tool changes, rather than adding a dedicated rim rolling stand as would be required in known rim rolling production lines.

According to a fourth aspect of the present invention there is provided a wheel for a very large vehicle comprising a wheel sub-assembly as hereinbefore described and further comprising a pneumatic tyre surrounding and seated in the outer and inner rim portions of the wheel sub-assembly.

The invention will now be described, by way of example only, and with reference to the following figures, in which:
Figure 1 is a side elevation of the wheel sub-assembly of the present invention;
Figure 2 is a partial cross-sectional view of the wheel sub-assembly of figure 1 taken at line A-A;
Figure 3 is a series of section views showing the press forming sequence of the outer rim;
Figure 4 is a series of section views showing the press forming sequence of the inner rim;
Figure 5 is a series of section views showing the press forming sequence of the disc;
Figure 6 is a sectional view of the outer rim of figure 3;
Figure 7 is a sectional view of the inner rim of figure 4.

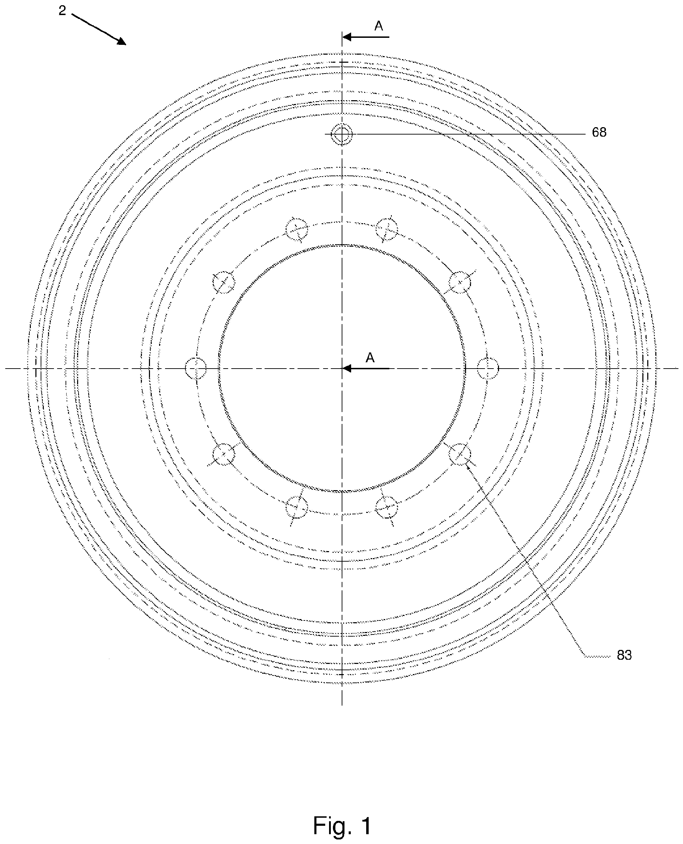

A circular wheel rim assembly 2 having an external diameter of 721mm is shown in figure 1.

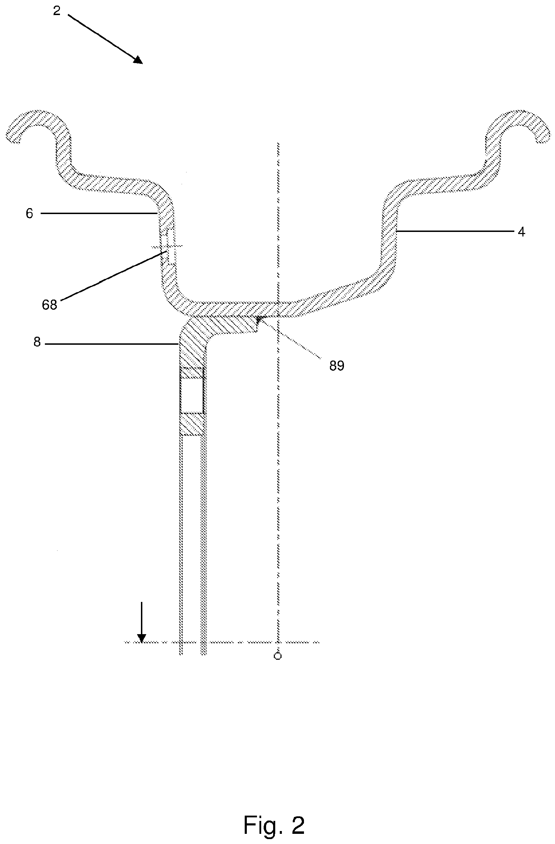

A cross-section taken at line A-A (see figure 2) shows that the wheel sub-assembly 2 comprises three principal components, an axially inner rim portion 4, an axially outer rim portion 6 and a disc 8.

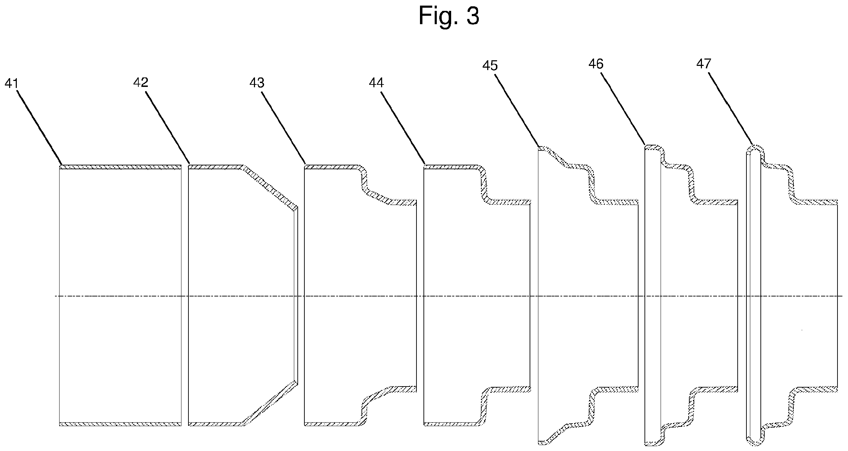

The inner rim portion 4 is a press-formed annulus made in a press tool using a series of six press operations 42, 43, 44, 45, 46, 47 (see figure 3) on the inner rim blank 41.

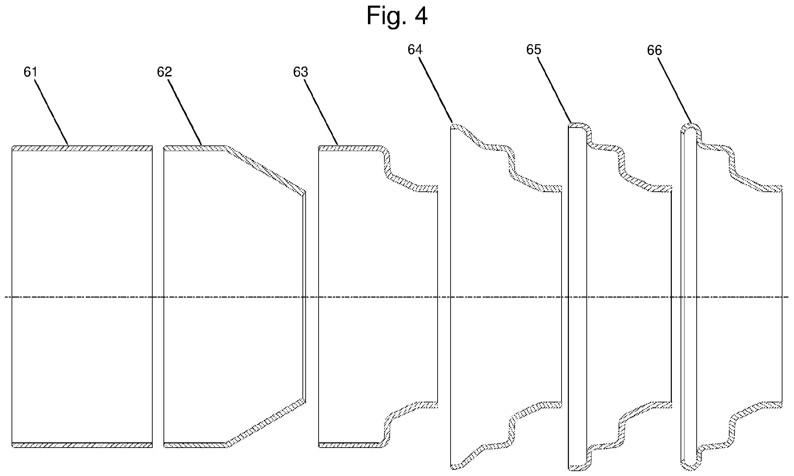

Similarly, the outer rim portion 6 is a press-formed annulus made in a press tool using a series five of press operations 62, 63, 64, 65, 66 (see figure 4) on the outer rim blank 61.

The outer rim portion 6 additionally includes valve hole 68.

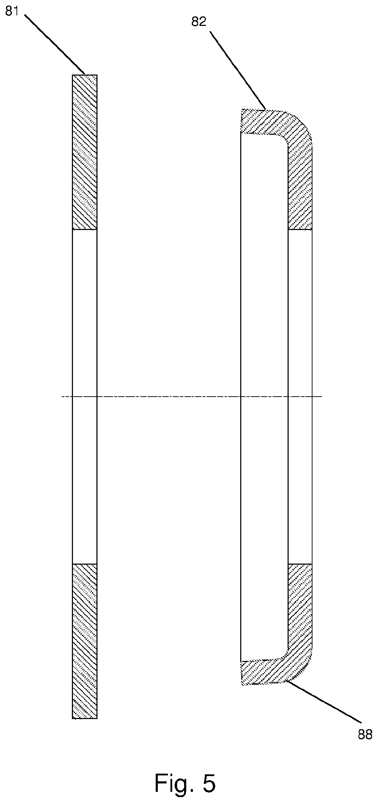

The disc blank 81 is an annulus, which undergoes a single press operation 82 (see figure 5) to create a disc 8 with a diameter of 440mm at its outside edge 88. The disc 8 includes 10 equally circumferentially-spaced wheel hub holes 83 for attachment to the axle of a vehicle (not shown).

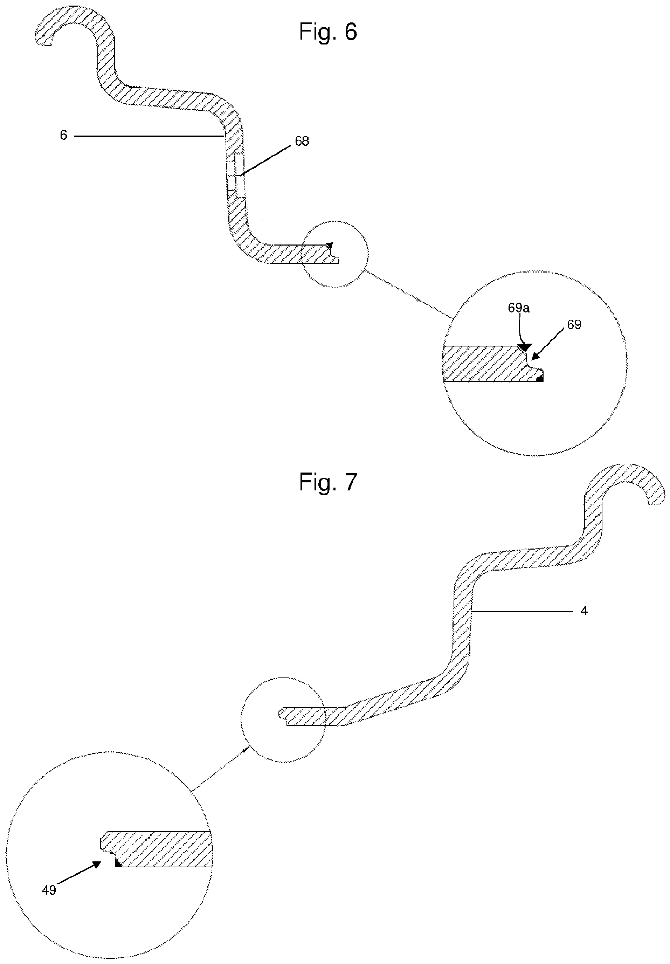

The press formed parts are assembled to form the wheel sub-assembly 2 as follows:
The inner rim portion 4 and outer rim portion 6 both include a machined detail 49, 69 (see figures 6 and 7), which interlock when the inner rim portion 4 and outer rim portion 6 are circumferentially joined, forming a wheel rim base. A circumferential weld 69a is applied at this interface. The wheel rim base defines a wheel well with a width of 280mm and a depth of 200mm for locating the pneumatic tyre (not shown).

The inside diameter of the wheel rim base is machined on the outer rim portion side of the wheel rim base. The outside edge 88 of the press formed disc is machined. The disc 8 and wheel rim base are fitted together at these machined surfaces and a circumferential weld 89 is applied at this interface.

## Claims

1. A method of manufacturing a wheel sub-assembly (2) for a wheel of a very large vehicle, the wheel having an axis of rotation, the method comprising the steps of:
providing a first cylindrical blank component, a second cylindrical blank component and an annular disc blank;
press forming the first blank component to form a one piece, axially outer rim portion (6);
press forming the second blank component to form a one piece, axially inner rim portion (4);
circumferentially joining the outer and inner rim portions (6, 4) to form an annular wheel rim having a base;
machining the inside diameter of the wheel rim base;
press forming the disc blank (81) to form a press-formed disc (8);
machining the outside edge (88) of the press-formed disc (8);
press fitting the press-formed disc (8) to the wheel rim base at the machined inside diameter;
welding the press-formed disc to the wheel rim base at the machined inside diameter.

2. A method of manufacturing a wheel sub-assembly (2) for a very large vehicle according to claim 1 wherein the step of press forming the first blank component to form an outer rim portion (6) comprises multiple press forming operations.

3. A method of manufacturing a wheel sub-assembly (2) for a very large vehicle according to claims 1 and 2 wherein the step of press forming the second blank component to form an inner rim portion (4) comprises multiple press forming operations.

4. A method of manufacturing a wheel sub-assembly (2) for a very large vehicle according to any preceding claim further including the step of machining a valve hole (68) into the outer rim portion (6).

5. A method of manufacturing a wheel sub-assembly (2) for a very large vehicle according to any of claims 1 to 3 further including the step of machining a valve hole (68) into the inner rim portion (4).

6. A method of manufacturing a wheel sub-assembly (2) for a very large vehicle according to any preceding claim further including the step of machining a detail (69) on the outer rim portion (6) and machining a corresponding detail (49) on the inner rim portion (4) so that when the outer and inner rim portions (6, 4) are joined those details (69, 49) substantially interlock.

7. A method of manufacturing a wheel sub-assembly (2) for a very large vehicle according to any preceding claim wherein the step of machining the inside diameter of the rim base is on the outer rim portion (6).

8. A method of manufacturing a wheel for a very large vehicle, comprising the steps of manufacturing a wheel sub-assembly (2) according to any of claims 1 to 7, and comprising the further step of arranging a pneumatic tyre to surround and seat in the outer and inner rim portions (6, 4) of the wheel sub-assembly (2).

9. A wheel sub-assembly (2) having an axis of rotation for a very large vehicle comprising:
a wheel rim; and
a disc (8);
said wheel rim comprising an axially outer and an axially inner rim portion (6, 4) press formed from first and second blank components respectively and circumferentially joined together to form an annular wheel rim having a wheel rim base, said disc (8) comprising a press formed disc blank (81) having a machined outer edge (88), press fitted and welded to a machined inside diameter of the wheel rim base.

10. A wheel for a very large vehicle comprising a wheel sub-assembly (2) according to claim 9 and further comprising a pneumatic tyre surrounding and seated in the outer and inner rim portions (6, 4) of the wheel sub-assembly (2).

## Patentansprüche

1. Verfahren zur Herstellung einer Rad-Baugruppe (2) für ein Rad eines sehr großen Fahrzeugs, wobei das Rad eine Rotationsachse aufweist, wobei das Verfahren die Schritte umfasst:
Bereitstellen eines ersten zylinderförmigen Rohlingteils, eines zweiten zylinderförmigen Rohlingteils und eines ringförmigen Scheibenrohlings,
Pressumformen des ersten Rohlingteils zum Ausbilden eines einteiligen, axialen Außenkranzabschnitts (6),
Pressumformen des zweiten Rohlingteils zum Ausbilden eines einteiligen, axialen Innenkranzabschnitts (4),
Zusammenfügen der Außen- und Innenkranzabschnitte (6, 4) entlang des Umfangs zum Ausbilden eines ringförmigen Radkranzes mit einer Basis,
Bearbeiten des Innendurchmessers der Radkranzbasis,
Pressumformen des Scheibenrohlings (81) zum Ausbilden einer pressumgeformten Scheibe (8),
Bearbeiten der Außenkante (88) der pressumgeformten Scheibe (8),
Presspassen der pressumgeformten Scheibe (8) an die Radkranzbasis am bearbeiteten Innendurchmesser,
Schweißen der pressumgeformten Scheibe an die Radkranzbasis am bearbeiteten Innendurchmesser.

2. Verfahren zur Herstellung einer Rad-Baugruppe (2) für ein sehr großes Fahrzeug nach Anspruch 1, bei dem der Schritt zum Pressumformen des ersten Rohlingteils zum Ausbilden eines Außenkranzabschnitts (6) mehrere Pressumformvorgänge umfasst.

3. Verfahren zur Herstellung einer Rad-Baugruppe (2) für ein sehr großes Fahrzeug nach Anspruch 1 oder 2, bei dem der Schritt zum Pressumformen des zweiten Rohlingteils zum Ausbilden eines Innenkranzabschnitts (4) mehrere Pressumformvorgänge umfasst.

4. Verfahren zur Herstellung einer Rad-Baugruppe (2) für ein sehr großes Fahrzeug nach einem der vorhergehenden Ansprüche, weiter umfassend den Schritt zum Einbringen eines Ventillochs (68) in den Außenkranzabschnitt (6).

5. Verfahren zur Herstellung einer Rad-Baugruppe (2) für ein sehr großes Fahrzeug nach einem der Ansprüche 1 bis 3, weiter umfassend den Schritt zum Einbringen eines Ventillochs (68) in den Innenkranzabschnitt (4).

6. Verfahren zur Herstellung einer Rad-Baugruppe (2) für ein sehr großes Fahrzeug nach einem der vorhergehenden Ansprüche, weiter umfassend den Schritt zum Bearbeiten eines Teilstücks (69) am Außenkranzabschnitt (6) und Bearbeiten eines korrespondierenden Teilstücks (49) am Innenkranzabschnitt (4), so dass, wenn die Außen- und Innenkranzabschnitte (6, 4) zusammengefügt werden, diese Teilstücke (69, 49) im Wesentlichen ineinandergreifen.

7. Verfahren zur Herstellung einer Rad-Baugruppe (2) für ein sehr großes Fahrzeug nach einem der vorhergehenden Ansprüche, bei dem der Schritt zum Bearbeiten des Innendurchmessers der Kranzbasis am Außenkranzabschnitt (6) erfolgt.

8. Verfahren zur Herstellung eines Rades für ein sehr großes Fahrzeug, umfassend die Schritte zur Herstellung einer Rad-Baugruppe (2) nach einem der Ansprüche 1 bis 7, und umfassend den weiteren Schritt zum Anordnen eines pneumatischen Reifens, der in den Außen- und Innenkranzabschnitten (6, 4) der Rad-Baugruppe (2) sitzt und sie umschließt.

9. Rad-Baugruppe (2) mit einer Rotationsachse für ein sehr großes Fahrzeug, umfassend:
einen Radkranz und
eine Scheibe (8),
wobei der Radkranz einen axialen Außen- und einen axialen Innenkranzabschnitt (6, 4) umfasst, die jeweils durch Pressumformen aus ersten und zweiten Rohlingteilen ausgebildet sind und entlang des Umfangs zusammengefügt sind, so dass ein ringförmiger Radkranz mit einer Radkranzbasis ausgebildet ist, wobei die Scheibe (8) einen pressumgeformten Scheibenrohling (81) mit einer bearbeiteten Außenkante (88) umfasst, die durch Presspassen und Schweißen am bearbeiteten Innendurchmesser der Radkranzbasis angebracht ist.

10. Rad für ein sehr großes Fahrzeug, umfassend eine Rad-Baugruppe (2) nach Anspruch 9 und weiter umfassend einen pneumatischen Reifen, der die Außen- und Innenkranzabschnitte (6, 4) der Rad-Baugruppe (2) umschließt und darin sitzt.

## Revendications

1. Procédé pour fabriquer un sous-ensemble de roue (2) pour une roue d'un très grand véhicule, la roue ayant un axe de rotation, le procédé comprenant les étapes qui consistent à :
prévoir un premier élément d'ébauche cylindrique, un deuxième élément d'ébauche cylindrique et une ébauche en forme de disque annulaire ;
à former à la presse le premier élément d'ébauche afin de former une partie de jante d'un seul tenant (6) extérieure axialement ;
à former à la presse le deuxième élément d'ébauche afin de former une partie de jante d'un seul tenant (4) intérieure axialement ;
à relier sur leur circonférence les parties de jante extérieure et intérieure (6, 4) afin de former une jante de roue annulaire qui présente une base ;
à usiner le diamètre intérieur de la base de jante de roue ;
à former à la presse l'ébauche en forme de disque (81) afin de former un disque formé à la presse (8) ;
à usiner le diamètre extérieur (88) du disque formé à la presse (8) ;
à monter à force le disque formé à la presse (8) sur la base de jante de roue au niveau du diamètre intérieur usiné ;
à souder le disque formé à la presse (8) sur la base de jante de roue au niveau du diamètre intérieur usiné.

2. Procédé pour fabriquer un sous-ensemble de roue (2) pour un très grand véhicule selon la revendication 1, selon lequel l'étape de formage à la presse du premier élément d'ébauche afin de former une partie de jante extérieure (6) comprend plusieurs opérations de formage à la presse.

3. Procédé pour fabriquer un sous-ensemble de roue (2) pour un très grand véhicule selon les revendications 1 et 2, selon lequel l'étape de formage à la presse du deuxième élément d'ébauche afin de former une partie de jante intérieure (4) comprend plusieurs opérations de formage à la presse.

4. Procédé pour fabriquer un sous-ensemble de roue (2) pour un très grand véhicule selon l'une quelconque des revendications précédentes, comprenant également l'étape d'usinage d'un perçage pour valve (68) dans la partie de jante extérieure (6).

5. Procédé pour fabriquer un sous-ensemble de roue (2) pour un très grand véhicule selon l'une quelconque des revendications 1 à 3, comprenant également l'étape d'usinage d'un perçage pour valve (68) dans la partie de jante intérieure (4).

6. Procédé pour fabriquer un sous-ensemble de roue (2) pour un très grand véhicule selon l'une quelconque des revendications précédentes, comprenant également l'étape d'usinage d'un détail (69) sur la partie de jante extérieure (6), et d'usinage d'un détail correspondant (49) sur la partie de jante intérieure (4) de telle sorte que lorsque les parties de jante extérieure et intérieure (6, 4) sont assemblées, ces détails (69, 49) s'emboîtent globalement.

7. Procédé pour fabriquer un sous-ensemble de roue (2) pour un très grand véhicule selon l'une quelconque des revendications précédentes, selon lequel l'étape d'usinage du diamètre intérieur de la base de jante est réalisée sur la partie de jante extérieure (6).

8. Procédé pour fabriquer une roue pour un très grand véhicule, comprenant les étapes de fabrication d'un sous-ensemble de roue (2) selon l'une quelconque des revendications 1 à 7, et comprenant l'étape supplémentaire qui consiste à disposer un pneumatique afin d'entourer les parties de jante extérieure et intérieure (6, 4) du sous-ensemble de roue (2) et d'être en appui dans celles-ci.

9. Sous-ensemble de roue (2) présentant un axe de rotation pour un très grand véhicule, comprenant :
une jante de roue ; et
un disque (8) ;
la jante de roue comprenant des première et deuxième parties de jante axialement extérieure et axialement intérieure (6, 4) qui sont formées à la presse à partir de premier et deuxième éléments d'ébauche assemblés respectivement et sur leur circonférence pour former une jante de roue annulaire qui présente une base de jante de roue, le disque (8) comprenant une ébauche en forme de disque formée à la presse (81) qui présente un bord extérieur usiné (88), qui est montée à force et soudée sur un diamètre intérieur usiné de la base de jante de roue.

10. Roue pour un très grand véhicule, comprenant un sous-ensemble de roue (2) selon la revendication 9 et comprenant également un pneumatique qui entoure les parties de jante extérieure et intérieure (6, 4) dudit sous-ensemble de roue (2) et est en appui dans celles-ci.
